# EUROPEAN PATENT APPLICATION

(11) **EP 0 793 225 A2**
(43) Date of publication of application: **03.09.1997**
(21) Application number: 97300872.5
(22) Date of filing: 11.02.1997
(51) Int. Cl.: G11B 15/02

(54) **Remote control of videocassette recorder operations over telephone lines**

(30) Priority: 22.02.1996 US 605698
(71) Applicant: LUCENT TECHNOLOGIES INC., Murray Hill, New Jersey 07974-0636 (US)
(72) Inventor: Levy, Marc Andrew, Old Bridge, New Jersey 08857 (US)
(74) Representative: Johnston, Kenneth Graham

(57) **Abstract**

Novel systems and methods control and/or program a videocassette recorder (VCR) from a remote location. An enhanced telephone answering machine is used with an existing infrared remote controllable VCR. The enhanced telephone answering machine includes a processor coupled to an infrared transmitter, a message delivery and recording system, a DTMF detector, and a memory device. The message delivery and recording system and the DTMF detector are adapted for coupling to a tip/ring line. A plurality of VCR commands are provided, each including a specified sequence of DTMF tones. The memory device stores a table associating each of a plurality of VCR commands with (a) an infrared transmitter activation parameter, and (b) a message delivery and recording device activation parameter.. In response to the receipt of a VCR command, the processor searches the table to retrieve the infrared transmitter activation parameter, and the message delivery and recording device activation parameter, associated with the command. The processor activates the infrared transmitter in accordance with the infrared transmitter activation parameter. The processor also activates the message delivery and recording device in accordance with the message delivery and recording device activation parameter.

## Description

### BACKGROUND OF THE INVENTION

### 1. Field of the Invention

The invention relates generally to telephone answering machines, and more specifically to answering machines that are used to control auxiliary devices such as videocassette recorders.

### 2. Background Art

Various functions of existing video cassette recorders (hereinafter, VCRs) are user-programmable and/or user-controllable. That is, the user can program the VCR to record a television program that is to be aired at a known date and time in the future. The VCR can be controlled to record a television program from a selected station in real time, to rewind the video cassette, and/or to play back a prerecorded tape, for example. Some VCR devices even permit the programming of separate recording times for each of a plurality of subsequently-occurring television programs. VCR control and program functions are performed by pressing the appropriate contact switches on the VCR device itself, and/or by pressing the appropriate keys on an infrared remote control that is coupled to the VCR device. In this manner, the VCR can be programmed to record television programs that are broadcast while the user is at work, out shopping, on vacation, or asleep.

One shortcoming of existing VCRs is that the user cannot control or program the VCR from a remote location beyond the range of the infrared remote control. If the user is expected to be away from home while a desired television program is broadcast, the user may forget to program the VCR before leaving home. Alternatively, the user may expect to return home to view a given broadcast, but is unexpectedly detained. Under either of the aforementioned sets of circumstances, the user will not be able to record the desired program on the VCR.

### SUMMARY OF THE INVENTION

Novel systems and methods are provided for controlling and/or programming a videocassette recorder (VCR) from a remote location. According to one embodiment disclosed herein, an enhanced telephone answering machine is provided for use with an existing VCR that is equipped to be controlled and/or programmed by an infrared remote control. The enhanced telephone answering machine includes a processor coupled to an infrared transmitter, a message delivery and recording system, a DTMF tone detector, and a memory device. The message delivery and recording system and the DTMF tone detector are each adapted for coupling to a tip/ring line.

A plurality of VCR commands are provided. Each VCR command includes a specified DTMF tone and/or a specified sequence of DTMF tones. The memory is adapted to store a VCR command lookup table associating each of the plurality of VCR commands with (a) a corresponding infrared transmitter activation parameter, and (b) a message delivery and recording device activation parameter.. In response to the receipt of a VCR command by the DTMF tone detector, the processor searches the VCR command lookup table to retrieve the infrared transmitter activation parameter, and the message delivery and recording device activation parameter, associated with the VCR command. The processor activates the infrared transmitter in accordance with the infrared transmitter activation parameter. The processor also activates the message delivery and recording device in accordance with the message delivery and recording device activation parameter.

### BRIEF DESCRIPTION OF THE DRAWINGS

FIG. 1 is a block diagram showing the hardware configuration of a system for controlling and/or programming a VCR from a remote location;
FIG. 2 is a data structure diagram showing a VCR Command Table constructed in accordance with an embodiment disclosed herein; and
FIG. 3 is a software flowchart showing a method for controlling and/or programming a VCR from a remote location according to an embodiment disclosed herein.

### DETAILED DESCRIPTION

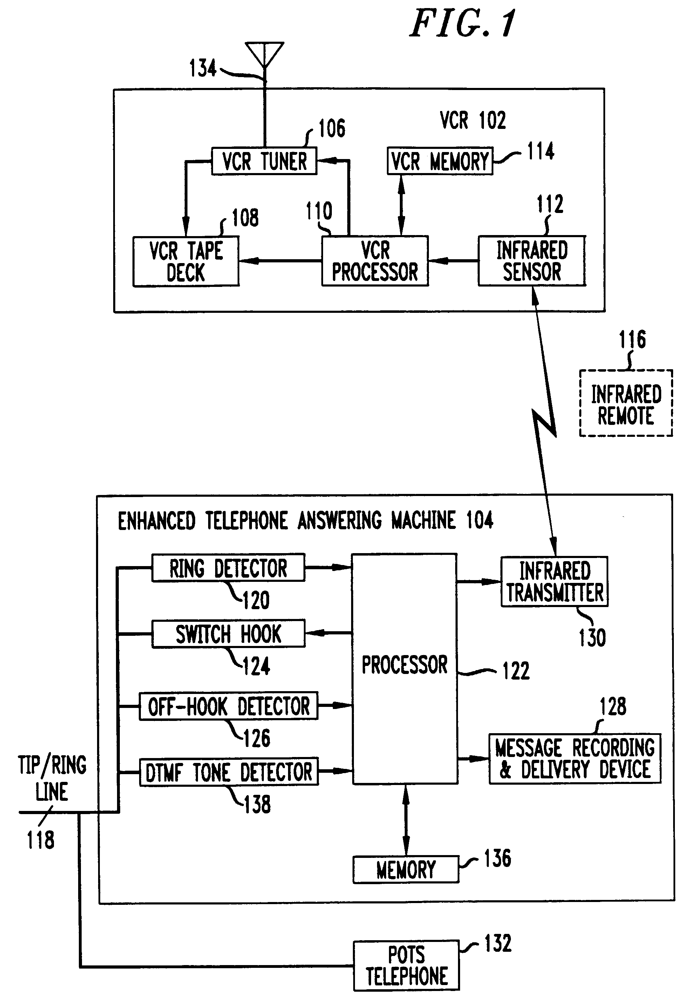

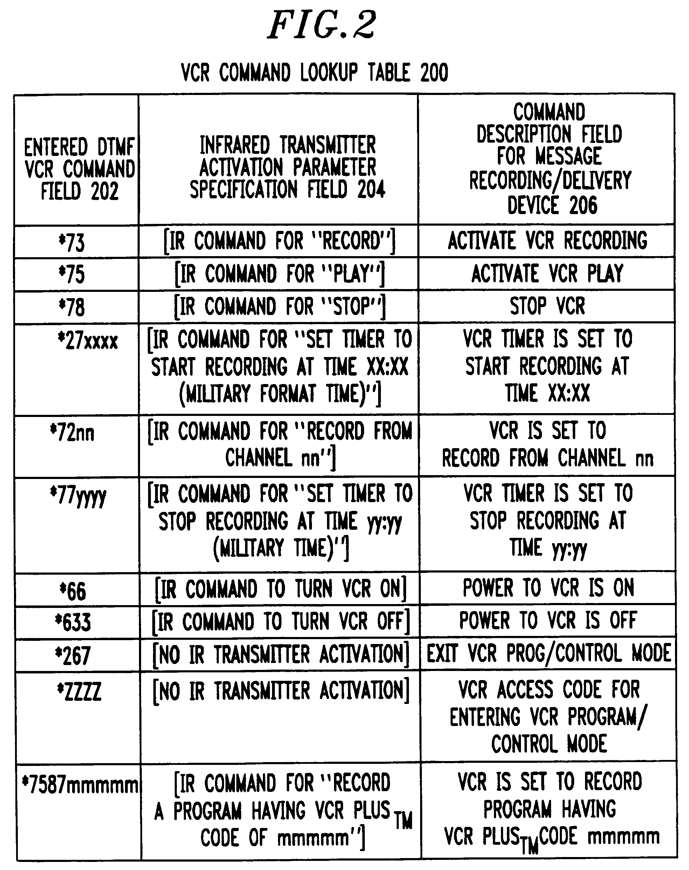

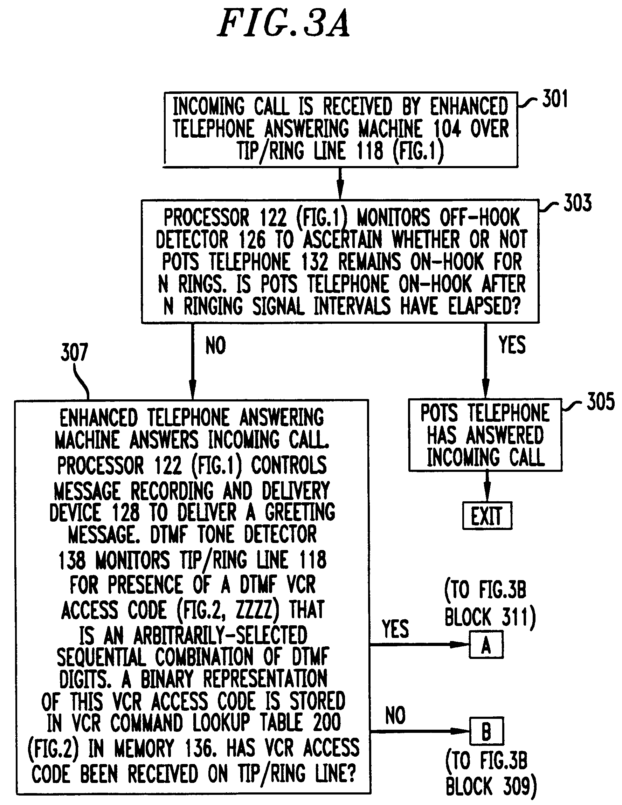

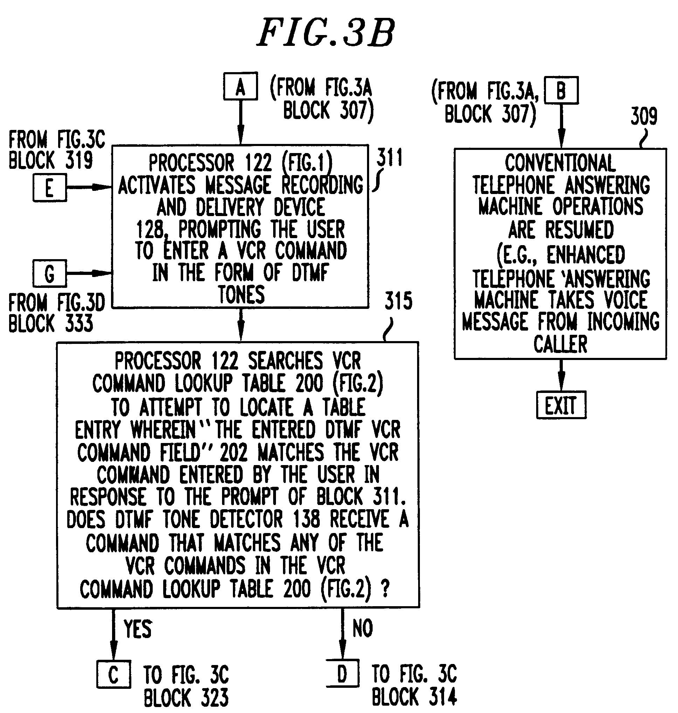

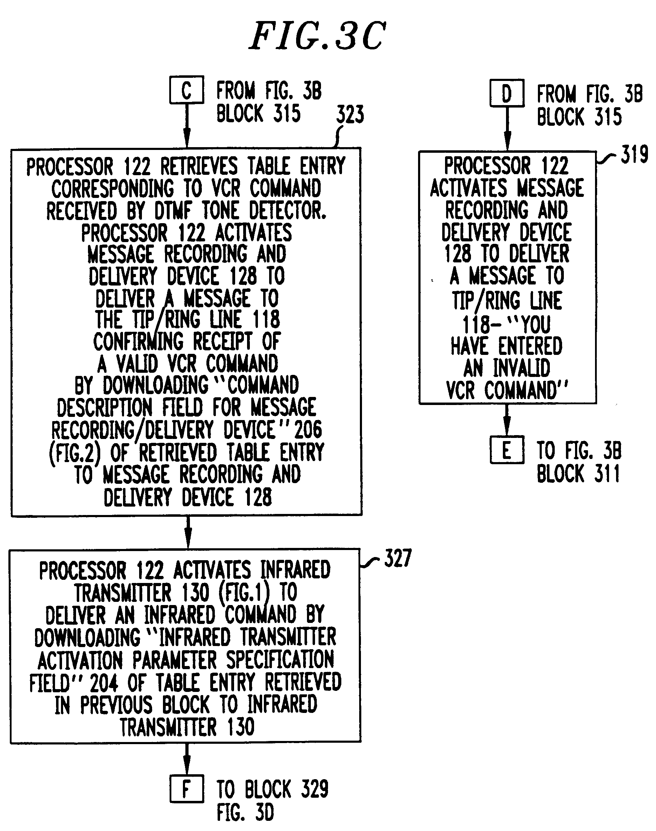

FIG. 1 is a block diagram showing the hardware configuration of a system for programming and/or controlling a VCR from a remote location. The system includes an enhanced telephone answering machine 104 adapted for use with an existing VCR 102. Note that VCR 102 is equipped to be controlled by an infrared remote control 116. VCR 102 includes a VCR tuner 106 coupled to an antenna 134. Antenna 134 may represent a traditional TV antenna, a connection to a cable TV system, and/or a connection to a satellite receiving apparatus. A VCR processor 110, coupled to a VCR memory 114, is programmed to control a VCR tape deck 108, as well as VCR tuner 106. Processor 110 is also coupled to an infrared sensor 112. The infrared sensor 112 is adapted to receive infrared command signals generated by infrared remote 116, and to convert these infrared signals into electronic command signals that are readable by VCR processor 110. VCR processor 110 responds to the electronic command signals by activating and/or deactivating the appropriate hardware element of VCR 102 at the appropriate time, such as, for example, VCR tape deck 108.

Infrared remote 116 is provided for user convenience. Infrared command signals from remote 116 are used to control the operation of VCR 102 from a relatively close-in remote location. In this manner, the user need not leave his or her easy chair to perform some VCR operations. For example, infrared command signals are used to instruct the VCR tape deck 108 to play, record, rewind, and fast-forward, to instruct the VCR tuner 106 to tune to a specified channel, to program the VCR to begin recording at a given time, and to program the VCR to stop recording at a given time. In addition, some, but not all, VCRs respond to infrared commands for programming the VCR to record a particular program, for adjusting the volume of the audio playback, and for setting the time on clock 111. Clock 111 is a real-time clock which processor 110 employs as a reference in determining the time at which the VCR is programmed to begin recording, and the time at which the VCR is programmed to stop recording.

Any one of several existing data protocols may be employed to implement these infrared command signals. These protocols are well-known to those skilled in the art. In general, the infrared command signals modulate a source of infrared radiation with a sequence of pulses or tones, such that a particular sequence represents a specific VCR command, i.e., play, record, stop, etc. Note that some presently-existing remote controls may be programmed to implement any of a plurality of data protocols selected by the user, whereas other remote controls are equipped to implement only one data protocol.

In general, a line-of-sight path must exist between infrared remote 116 and infrared sensor 112, or the infrared sensor will be unable to receive infrared command signals issued by infrared remote 116. Moreover, even if such a line-of-sight path exists, the infrared command signals are attenuated with increasing distance from the remote, such that the signals are no longer of sufficient amplitude to be received by infrared sensor at a distance greater than about twenty feet or so. Presently-existing infrared remote control extender devices can extend this distance range, providing coverage throughout several rooms of a typical residential home by coupling to the AC power lines, by using 900-Mhz signals, and/or by receiving, amplifying, and retransmitting the infrared command signals emitted by remote 116. However, these remote control extender devices do not generally provide significant remote control coverage outside the confines of a typical residential home.

In many circumstances, it would be desirable to control the operations of the VCR 102 from relatively great distances, well beyond the boundaries of a residence in which the VCR is located. For example, a VCR user may wish to record a given program while he or she is expected to be away from home. In many cases, the VCR user leaves home, forgetting to program the VCR. When the VCR user finally remembers that the VCR was not programmed, the user may be at a substantial distance from home, possibly at work, at school, or on vacation. Using prior art technology, the user is faced with the dilemma of either returning home to program the VCR, with the resultant inconvenience, expense, and loss of time, or missing the television program altogether. If the user is on vacation, a return trip home to program the VCR is oftentimes impractical and out of the question.

Pursuant to the techniques disclosed herein, enhanced telephone answering machine 104 is employed to control and/or to program VCR 102 from any location having access to the public telephone network. Such a location may be well beyond the range of remote 116, and also beyond the range of existing remote control extender devices. The enhanced telephone answering machine 104 is equipped with an infrared transmitter 130 and a processor 122 programmed to activate infrared transmitter 130 in response to DTMF signals received over the public telephone network, i.e., over tip/ring line 118. The infrared transmitter 130 is coupled to the infrared sensor 112 of the VCR 102. The enhanced telephone answering machine 104 is coupled to a tip/ring line 118 of the public telephone network, and/or to a wireless communications link that is coupled to the public telephone network.

The enhanced telephone answering machine 104 includes a ring detector 120, a switch hook 124, an off-hook detector 126, a message delivery and recording device 128, and a DTMF detector 138 which are each coupled to the tip/ring line 118 and the processor 122. Conventional components may be employed to implement ring detector 120, switch hook 124, off-hook detector 126, DTMF detector 138, and processor 122. For example, a conventional microprocessor integrated circuit may be used for processor 122. Processor 122 is coupled to a memory 136, which may be a conventional random-access memory device (RAM), a read-only memory device (ROM), or any convenient combination of RAM and ROM.

Suitable hardware configurations for message delivery and recording device 128 may be found in presently-existing answering machines. To this end, note that message delivery and recording device 128 may, but need not, be integrated into memory 136. Processor 122 is equipped to retrieve two general categories of messages from message delivery and recording device 128. The first category includes incoming messages received from calling parties and greeting messages recorded by the answering machine user. The second category includes predetermined messages to be delivered to an answering machine user/caller, such as a list of DTMF commands which may be entered, a voice prompt, and/or a voice menu. The first category of messages may, but need not, be stored in RAM, and the second category of messages may, but need not, be stored in ROM.

Incoming messages are recorded by digitally sampling and storing the incoming message in digital form in an electronic memory, and/or by storing the incoming message in analog form on a microcassette tape. The processor 122 selects an outgoing message for delivery by instructing message delivery and recording device 128 to retrieve a given digitized message from electronic memory, and/or to retrieve a given analog message from a microcassette tape. If the retrieved message is in digitized form, the message delivery and recording device 128 converts the message into analog form and places the message on tip/ring line 118. If the retrieved message is in analog form, the message may be placed directly on tip/ring line 118.

Existing answering machines use message delivery and recording device 128 to allow the answering machine user to retrieve incoming messages from a remote location by entering a security code followed by various optional commands. After the user dials into the answering machine and enters a DTMF security code, the message delivery and recording system may deliver one or more messages to the user, and these messages may include messages in the first and/or second categories mentioned above.

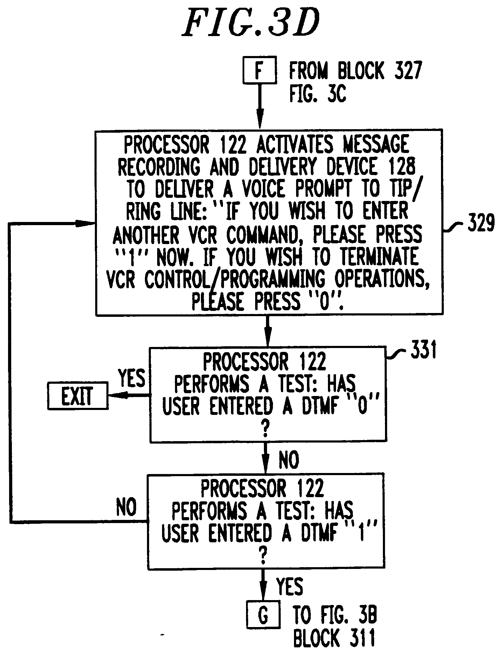

In addition to providing voice prompts related to message retrieval, the message recording and delivery device 128 of enhanced telephone answering machine 104 is programmed to provide voice menus related to VCR commands. As will be described in greater detail below in connection with FIG. 3, the user programs and/or controls VCR 102 by placing an incoming call to the enhanced telephone answering machine 104. Upon receipt of a selected sequence of DTMF digits on tip/ring line 118, the enhanced telephone answering machine enters a VCR control/program mode. In the control/program mode, the user enters one or more DTMF VCR commands. The enhanced telephone answering machine converts these DTMF VCR commands into infrared command signals for controlling and/or programming VCR 102, in accordance with the table of FIG. 2.

FIG. 2 is a table showing the data structure of an illustrative VCR Command Lookup Table 200 for providing a plurality of DTMF VCR commands. VCR Command Lookup Table 200 is stored in memory 136 (FIG. 1). The lookup table includes an "entered DTMF VCR command field" 202, an "infrared transmitter activation parameter specification field" 204, and a "command description field for message delivery/recording device" 206. The "entered DTMF VCR command field" 202 includes a plurality of VCR commands in the form of specified sequences of DTMF digits. Each VCR command is associated with (a) a corresponding infrared transmitter activation parameter, and (b) a message delivery and recording device activation parameter. The infrared transmitter activation parameter is stored in the "infrared transmitter activation parameter specification field" 204, and the message delivery and recording device activation parameter is stored in the "command description field for message delivery/recording device" 206.

In the example of FIG. 2, the DTMF sequence *73 (* RE) corresponds to the infrared command instructing the VCR to begin recording now. This DTMF sequence was selected for illustrative purposes only, it being clearly understood that other convenient DTMF sequences may alternatively be employed to implement the "begin recording now" command. Such alternative DTMF sequences could contain as few as one DTMF digit, or as many as ten or so DTMF digits, and such sequences need not begin with the "*" key.

In the present case, *73 was selected as the command corresponding to "***RE***cord" because the alphanumeric character "R" appears on the "7" key of conventional DTMF keypads, the alphanumeric character "E" appears on the "3" key of conventional DTMF keypads, "R" and "E" are the first two letters of the word "RECORD", and a longer DTMF command would be cumbersome to enter. Similarly, *75 (*PL) was selected as the command corresponding to "***PL***ay", *78 (*ST) for "***ST***op", and *27xxxx (*BR) for "***B***egin ***R***ecording at time xx:xx", where xx:xx represents military-format time entered as DTMF digits. However, note that conventional 12-hour time could be employed, followed by a designation for AM and/or PM. *72nn (^{∗} RC) specifies "***R***ecord from Channel nn" where nn represents a cable and/or broadcast channel numbered nn. *77yyyy (*SR) specifies "***S***top ***R***ecording at time yy:yy wherein yy:yy represents military-format time entered as DTMF digits. As in the case of the Begin Recording command, conventional 12-hour time could be employed here, followed by a designation for AM and/or PM.

*66 (*ON) is the command to turn ON the power to VCR 102, and *633 (*OFF) is the command to turn power to the VCR OFF. *267 (*ANS) is the command for exiting the VCR program/control mode and resuming normal answering machine operations that do not involve VCR 102, such as retrieving incoming telephone messages. *zzzz is the command for entering the VCR program/control mode, and also functions as an access and/or security code so that incoming callers reaching enhanced telephone answering machine 104 will not be able to control/program VCR 102 unless they know the proper security code. In this example, zzzz represents an arbitrarily-selected sequence of DTMF digits that may be selected by the user as the security code, and/or may be programmed into the VCR command lookup table 200 at the factory. Processor 122 may, but need not, be programmed to permit the user to change this security code at will. Of course, a four digit security code has been shown for illustrative purposes only, it being understood that codes having fewer or greater than four DTMF digits may also be employed.

A DTMF command (i.e., *7587*mmmmm* for *PLUS*mmmmm*) may be employed to activate a simplified VCR recording mode generally known as "VCR Plus" and offered in the United States by the GemStar Corporation. Pursuant to the VCR Plus system, specific television programs are assigned corresponding five-digit codes, denoted in the present example by *mmmmm*. On a VCR 102 equipped with VCR Plus, the VCR user need only enter a specially-designated key on the infrared remote 116 (thereby generating an infrared "activate VCR Plus" control signal), followed by the five-digit VCR Plus code, and the VCR will automatically record the desired program at the appropriate time. In the context of enhanced telephone answering machine 104, when the DTMF detector 138 (FIG. 1) receives the DTMF command for VCR Plus (i.e., *7857*mmmmm*), the processor activates the infrared transmitter 130 with the "activate VCR Plus" control signal, followed by the VCR Plus code *(mmmmm).*

The specific sequences of DTMF digits assigned to the various commands of FIG. 2 are shown for purposes of illustration, it being understood that it is possible to assign other DTMF sequences to represent given commands. Commands do not necessarily have to begin with a DTMF * , or with any other specific DTMF entry, nor do commands have to include a minimum of three DTMF entries. A command may include as few as one DTMF key entry, or as many key entries as desired in order to convey the required information and in keeping with the limits of practicality and convenience. Moreover, VCR commands other than those shown in FIG. 2 may be represented using DTMF digit sequences.

The manner in which the infrared transmitter 130 (FIG. 1) must be modulated to command VCR 102 to start recording is stored in the "infrared transmitter activation parameter specification field" 204 (FIG. 2). Note that different VCR manufacturers do not generally use the same infrared modulation scheme to instruct the VCR to start recording. Therefore, the VCR Command Lookup Table 200 may be provided with a plurality of "infrared transmitter activation parameter specification fields" 204, wherein each such field is associated with a given VCR manufacturer. In this situation, the processor 122 (FIG. 1) is programmed to prompt the user as to the manufacturer of the user's VCR during initial setup of the enhanced telephone answering machine 104. The processor then activates the transmitter activation parameter specification field 204 (FIG. 2) corresponding to this manufacturer, and disables any remaining transmitter activation parameter specification fields. If no transmitter activation parameter specification fields 204 correspond to the manufacturer entered by the user, the processor 122 (FIG. 1) activates message delivery and recording device 128 to deliver a voice message to the user, "This telephone answering machine is not programmed to control your particular brand of VCR". The processor 122 may be programmed to provide a voice menu option allowing the user to change the VCR manufacturer specified during initial setup in the event that the user changes or upgrades VCR 102.

The command description field for message delivery/recording device 206 (FIG. 2) is used by the processor 122 (FIG. 1) to activate the message delivery and recording device 128. The message delivery and recording device 128 is activated to deliver a message descriptive of the DTMF command entered by the user and set forth in the "entered DTMF VCR command field" 202 (FIG. 2). For example, in the case of the ^{∗}73 command (Record), the "command description field for message delivery/recording device" 206 contains the entry "activate VCR recording now". The processor 122 (FIG. 1) downloads this entry to the message delivery/recording device 128, and the message delivery/recording device converts the entry into a voice prompt stating "activate VCR recording now". The entries shown in the "command description field for message delivery/recording device" 206 (FIG. 2) are for illustrative purposes, and other entries descriptive of the commands in the "entered DTMF VCR command field" 202 could also be employed.

In response to the receipt of a VCR command by the DTMF tone detector 138 (FIG. 1), the processor 122 searches the VCR command lookup table 200 (FIG. 2) to retrieve the infrared transmitter activation parameter, and the message delivery and recording device activation parameter, associated with the VCR command. The processor activates the infrared transmitter in accordance with the infrared transmitter activation parameter set forth in the 'infrared transmitter activation parameter specification field" 204 (FIG. 2). The processor also activates the message delivery and recording device in accordance with the message delivery and recording device activation parameter specified in the "command description field for message delivery/recording device" 206.

FIG. 3 is a software flowchart showing a method for programming and/or controlling a VCR from a remote location according to an embodiment disclosed herein. The program commences at block 301, where an incoming telephone call is received by enhanced telephone answering machine 104 (FIG. 1) over tip/ring line 118 (FIG. 1). At this point, the incoming call may be originated by the VCR user, who is calling the enhanced telephone answering machine 104 from a location that is remote with respect to VCR 102. However, it is also possible that the incoming call was originated by a third party who wishes to leave a voice message on the enhanced telephone answering machine 104, and who, in fact, may be unaware that the enhanced telephone answering machine 104 is equipped to control/program a VCR. It is also possible that the incoming call was originated by the VCR user, but the VCR user wishes only to retrieve incoming voice messages, and not to control/program the VCR at this time. Moreover, regardless of who originated the incoming call, and regardless of the call's purpose (VCR control, leaving a voice message, retrieving voice messages, etc.), an individual in the proximity of POTS telephone (plain old telephone set) 132 (FIG. 1) may answer the incoming call. Note that, although POTS telephone 132 is shown as a discrete element in the configuration of FIG. 1, it is also possible to integrate POTS telephone 132 into enhanced telephone answering machine 104.

The factors described in the preceding paragraph are taken into consideration with reference to the sequence of operations performed at blocks 303 and 305. Block 303 addresses the situation where an individual answers the incoming call using POTS telephone 132. Processor 122 monitors off-hook detector 126 to ascertain whether or not POTS telephone 132 remains on-hook for at least N ring signal intervals, where N is selected to be a convenient number in the range of, say, one to twelve ring signal intervals. If the POTS telephone 132 is off-hook after N ring signal intervals have elapsed, program control progresses to block 305 where it is determined that the POTS telephone 132 has answered the incoming call, and the program exits.

If the incoming telephone call is not answered after N ring signal intervals have elapsed, program control progresses to block 307. At this stage, it is still not yet known whether the incoming call is from the VCR user or a third-party caller. Moreover, if the call is from the VCR user, it is not known whether the VCR user wishes to access conventional telephone answering machine functions, VCR control/programming functions, or both answering machine and VCR functions Therefore, the enhanced telephone answering machine 104 answers the incoming call and processor 122 instructs message delivery and recording device 128 to deliver a greeting message to tip/ring line 118. It is assumed that an appropriate greeting message has been previously recorded by the user of enhanced telephone answering machine 104 and stored in message delivery and recording device 128.

Next, DTMF tone detector 138 monitors the tip/ring line 118 for a DTMF VCR access code that is an arbitrarily-selected sequential combination of DTMF digits. This access code is stored in the Entered DTMF VCR Command Field 202 of the VCR Command Lookup Table 200 (FIG. 2). The VCR Command Lookup Table 200 is stored in memory 136 (FIG. 1). Processor 122 monitors the DTMF tone detector 138 to ascertain whether or not any DTMF digits are received on tip/ring line. If any DTMF digits are received, the processor 122 compares the access code stored in memory 136 with the DTMF digits received by DTMF tone detector 138.

The processor determines whether or not the digits received by DTMF tone detector 138 match the access code stored in memory 136. If the processor 122 determines that the received digits match the access code stored in memory, program control progresses to block 311, described below. If no DTMF digits are received, or if the processor 122 determines that the received digits do not match the access code stored in memory, the program advances to block 309 where conventional telephone answering machine operations are resumed. If, for example, the incoming call is from a third party caller, the message delivery and recording device 128 of enhanced telephone answering machine 104 (FIG. 1) stores an incoming message from the third party. If the incoming call is from the enhanced telephone answering machine 104 user, then the processor 122 allows the user to retrieve incoming messages in a conventional manner. Typically, these messages are retrieved when the user enters a special DTMF message retrieval security code stored in memory 136. To avoid confusion in the context of the present situation, the enhanced telephone answering machine 104 user would not select identical DTMF sequences for the VCR access code and the message retrieval security code.

Optionally, the processor 122 may be programmed, as part of the operations to be performed at block 307, to allow for the situation where the message retrieval security code and the VCR access code are identical. Use of such a common code may be advantageous, in that the user need only remember a single code instead of two separate codes. In such a case, the processor 122 monitors DTMF tone detector 138 to ascertain whether or not the common code has been received on tip/ring line 118. If the code has been received, the processor then activates the message delivery and recording device 128 to deliver a voice prompt to the user asking whether the user desires to retrieve incoming messages, or to program/control the VCR, to enter a first DTMF digit or sequence of DTMF digits if message retrieval is desired, and to enter a second DTMF digit or sequence of DTMF digits if VCR program/control is desired. Processor 122 then monitors the DTMF tone detector 138. If DTMF tone detector 138 receives the first DTMF digit or sequence of DTMF digits, program control advances to block 309 (FIG. 3) where conventional telephone answering machine operations are resumed, and if DTMF tone detector 138 (FIG. 1) receives the second DTMF digit or sequence of DTMF digits, then program control advances to block 311 (FIG. 3).

Program control advances from block 307 to block 311 when the processor 122 determines (at block 307) that the user wishes to program/control the VCR 102 (FIG. 1). At block 311, the processor 122 (FIG. 1) activates message delivery and recording device 128, prompting the user to enter a VCR command in the form of DTMF tones. Commands available from infrared remote 116 and loaded into the "entered DTMF VCR command field" 202 (FIG. 2) may be entered by the user at this time. The user enters a sequence of DTMF digits corresponding to the desired VCR command.

The program progresses to block 315 where the processor 122 checks the DTMF tone detector 138 to ascertain whether or not a valid VCR command has been received. In this context, a valid VCR command is any command included in the "entered DTMF VCR command field" 202 (FIG. 2). Therefore, at this time, processor 122 (FIG. 1) searches the VCR Command Lookup Table 200 (FIG. 2) to find a table entry corresponding to the received command, i.e., an entry wherein the "entered DTMF VCR Command field" 202 matches the received sequence of DTMF digits. If such a table entry is found, the processor 122 (FIG. 1) retrieves the table entry and advances to block 323. If a valid command has not been received (no matching entry found in the VCR command lookup table 200, FIG. 2), the program advances to block 319 (FIG. 3) where processor 122 (FIG. 1) activates message delivery and recording device 128 to deliver an error message to tip/ring line 138, "You have entered an invalid VCR command. Please try again, or hang up to terminate VCR program/control operations." The program then loops back to block 311 (FIG. 3).

If the user has entered a valid VCR command, the program advances to block 323 where processor 122 (FIG. 1) downloads a portion of the table entry retrieved at block 315 (FIG. 3) to the message delivery and recording device 128 (FIG. 1). The portion of the table entry downloaded to the message delivery and recording device 128 is the "command description field for message delivery/recording device" 206 of the table entry retrieved at block 315 (FIG. 3). Processor 122 (FIG. 1) then activates message delivery and recording device 128 to deliver a confirmation message to the tip/ring line 118 of the general form, "You have entered a valid VCR command. This command, specifying X, will now be executed", where X is the description of the command as set forth in the "command description field for message delivery/recording device" 206 (FIG. 2).

At block 327 (FIG. 3), processor 122 (FIG. 1) activates infrared transmitter 130 using the "infrared transmitter activation parameter specification field" 204 (FIG. 2) of the table entry retrieved at block 315 (FIG. 3). Note that the operations of block 323 may be performed immediately prior to, immediately after, and/or simultaneously with the operations of block 327. Next, at block 329, the processor 122 (FIG. 1) activates the message delivery and recording device 128 to deliver a voice prompt of the general form "If you wish to enter another VCR command, please press one now. If you desire to terminate VCR control/programming operations, please press zero." At block 331, the processor 122 performs a test to ascertain whether or not the user has entered a DTMF "0". If so, the program exits and conventional telephone answering machine operations resume. If not, program control progresses to block 333 where the processor 122 performs a test to ascertain whether or not the user has entered a DTMF "1". If the user has not entered a DTMF "1", the program loops back to block 329. If the user has entered a DTMF "1", the program loops back to block 311.

## Claims

1. A system for controlling and/or programming a videocassette recorder (VCR) from a remote location, the system adapted for use with (a) an existing VCR equipped to be controlled and/or programmed by a remote infrared control, (b) input means for accepting non-infrared electronic representations of VCR commands; and (c) a communications means coupled between the input means and the system; the system CHARACTERIZED BY:
(a) a receiver, coupled to the communications means, for receiving the non-infrared electronic representations of VCR commands;
(b) conversion means, coupled to the receiver, for converting a received non-infrared electronic representation of a VCR command into an infrared VCR command;
(c) an infrared transmitter, coupled to the conversion means, for transmitting infrared VCR commands.

2. A system for controlling and/or programming a videocassette recorder (VCR) from a remote location, the system adapted for use with an existing VCR equipped to be controlled and/or programmed by an infrared remote control, the system CHARACTERIZED BY an enhanced telephone answering machine including:
(a) a processor;
(b) an infrared transmitter;
(c) a message delivery and recording system;
(d) a DTMF tone detector; and
(e) a memory device;
wherein the infrared transmitter, the message delivery and recording system, the DTMF tone detector, and the memory device are all coupled to the processor; and
wherein the message delivery and recording system and the DTMF tone detector are adapted for coupling to a tip/ring line.

3. A system for controlling and/or programming a VCR as set forth in Claim 2 wherein the memory device is adapted to store a plurality of VCR commands, each VCR command including a specified DTMF tone and/or a specified sequence of DTMF tones.

4. A system for controlling and/or programming a VCR as set forth in Claim 3 wherein the VCR commands are stored in the form of a VCR command lookup table associating each of the plurality of VCR commands with (a) a corresponding infrared transmitter activation parameter, and (b) a message delivery and recording device activation parameter;
the infrared transmitter activation parameter specifying the manner in which the infrared transmitter is to be activated in response to the DTMF tone detector receiving a given VCR command;
the message delivery and recording device activation parameter specifying the manner in which the message delivery and recording device is to be activated in response to the DTMF tone detector receiving a given VCR command.

5. A method for controlling and/or programming a videocassette recorder (VCR) from a remote location, the method adapted for use with (i) an existing VCR equipped to be controlled and/or programmed by an infrared remote control and (ii) an enhanced telephone answering machine including a processor, an infrared transmitter, a message delivery and recording system, a DTMF tone detector; and a memory device; the infrared transmitter, the message delivery and recording system, the DTMF tone detector, and the memory device being coupled to the processor; the message delivery and recording system and the DTMF tone detector being adapted for coupling to a tip/ring line;
the method CHARACTERIZED BY the steps of:.
(a) storing a first VCR command in the memory device; and
(b) storing a second VCR command in the memory device;
wherein each VCR command includes a specified DTMF tone and/or a specified sequence of DTMF tones.

6. A method for controlling and/or programming a VCR as set forth in Claim 5 further including the step of storing the first and second VCR commands in the form of a VCR command lookup table associating each VCR command with (a) a corresponding infrared transmitter activation parameter, and (b) a message delivery and recording device activation parameter;
the infrared transmitter activation parameter specifying the manner in which the infrared transmitter is to be activated in response to the DTMF tone detector receiving a given VCR command;
the message delivery and recording device activation parameter specifying the manner in which the message delivery and recording device is to be activated in response to the DTMF tone detector receiving a given VCR command.

7. A method for programming and/or controlling a VCR as set forth in Claim 6 further including the steps of:
(a) in response to the receipt of a VCR command by the DTMF tone detector, the processor searching the VCR command lookup table to retrieve the infrared transmitter activation parameter associated with the VCR command; and
(b) in response to the receipt of a VCR command by the DTMF tone detector, the processor searching the VCR command lookup table to retrieve the message delivery and recording device activation parameter associated with the VCR command.

8. A method for programming and/or controlling a VCR as set forth in Claim 7 further including the step of the processor activating the infrared transmitter in accordance with the infrared transmitter activation parameter.

9. A method for programming and/or controlling a VCR as set forth in Claim 7 further including the step of the processor activating the message delivery and recording device in accordance with the message delivery and recording device activation parameter.
